# EUROPÄISCHE PATENTSCHRIFT

(11) **EP 0 493 773 B1**
(45) Veröffentlichungstag und Bekanntmachung des Hinweises auf die Patenterteilung: **04.09.1996**
(21) Anmeldenummer: 91122080.4
(22) Anmeldetag: 21.12.1991
(51) Int. Cl.: B62K 25/30, B62M 9/16

(54) **Gefedertes Fahrrad**
Bicycle with sprung suspension
Bicyclette à amortisseurs

(30) Priorität: 21.12.1990 DE 4041375
(43) Veröffentlichungstag der Anmeldung: 08.07.1992
(73) Patentinhaber: Gally, Otto, D-82490 Farchant (DE)
(72) Erfinder: Gally, Otto, D-82490 Farchant (DE)
(74) Vertreter: Baronetzky, Klaus, Dipl.-Ing.

(56) Entgegenhaltungen:
- DE-A- 3 500 601
- DE-A- 3 542 353
- US-A- 4 159 105
- US-A- 4 599 079

## Beschreibung

Die Erfindung betrifft ein gefedertes Fahrrad nach dem Oberbegriff von Anspruch 1.

Aus der US-PS 45 82 343 und der US-PS 46 79 811 sind derartige gefederte Fahrräder bekannt, deren Hinterrad mit einer Spiral-Druckfeder gegen den Rahmen abgefedert ist.

Mit einer manuell betätigten Sperreinrichtung läßt sich die Federwirkung abschalten, wenn eine größere Sportlichkeit und ein geringerer Komfort gewünscht ist. Aus der US-PS 45 82 343 ist es zudem bekannt, die Abschaltung der Federwirkung lediglich in Einfederrichtung vorzunehmen und hierzu ein entsprechendes Rückschlagventil im Hydraulikkreis eines Stoßdämpfers zu verwenden.

Bei der Bergfahrt, insbesondere unter Wettbewerbsbedingungen, ist der Fahrer mit der Bedienung der Schalthebel für die Wahl des richtigen Ganges, sowie dem Einsatz der maximalen Kraft in der Regel vollständig ausgelastet, so daß das Erfordernis einer weiteren Bedienfunktion bereits deswegen ungünstig ist. Häufig kann auch ein entsprechendes Umschalten nicht schnell genug durchgeführt werden oder wird vollständig unterlassen, wenn in rascher Folge unwegsame Strecken, bei welchen die Federwirkung erwünscnt ist, und gerade Strecken, bei welchen die Federwirkung unerwünscht ist, aufeinanderfolgen.

Demgegenüber ist es Aufgabe der Erfindung, eine gefedertes Fahrrad gemäß dem Oberbegriff von Anspruch 1 zu schaffen, das ein komfortables und sportliches Fahren auch bei rascher Aufeinanderfolge unterschiedlicher Wegstrecken ermöglicht, ohne daß erhebliche Gewichts- und Schwerpunktnachteile in Kauf genommen werden müsse.

Diese Aufgabe wird erfindungsgemäß durch Anspruch 1 gelöst. Vorteilhafte Weiterbildungen ergeben sich aus den Unteransprüchen.

Besonders günstig ist das erfindungsgemäße automatische Ansprechen der Behinderungseinrichtung, die auch als Sperreinrichtung ausgebildet sein kann, dann, wenn der Fahrer mindestens eine beträchtliche Pedalkraft aufbringt. Durch diese Automatik läßt sich eine den unterschiedlichen Betriebszuständen gerecht werdende Radaufhängung realisieren. Es hat sich gezeigt, daß beim Überfahren eines Hindernisses sowohl der sportliche als auch der Alltagsfahrer die Antriebskraft zurücknimmt, während der sportliche Fahrer sogar unter Zuhilfenahme der an den Pedalen angebrachten Rennhaken über das Hindernis springt. Bei verminderter und fehlender Antriebskraft ist hingegen die volle Federungsmöglichkeit gewahrt.

Beim Bergauffahren wird hingegen eine erhöhte Antriebskraft aufgebracht, so daß die Federung automatisch zunächst härter wird und bei weiter zunehmender Antriebskraft sperrt. Ein einseitiges Sperren, das die ausgefederte Stellung des Hinterrades begünstigt, läßt sich beim Bergauffahren zum einen zu einer günstigeren Lage des Schwerpunkts und zum anderen zur Erhöhung der Bodenfreiheit einsetzen. Zudem wirkt die Einfederbewegung beim Bergauffahren kraftzehrend, so daß der Kraftübertragungs-Wirkungsgrad gegenüber einem Fahrrad mit starrem Rahmen gleichbleibt, wenn das Einfedern verhindert wird.

Gemäß einer vorteilhaften Ausgestaltung ist der Antriebskraftfühler nach der Art eines Kettenölers ausgestaltet, der auf dem Umwerfer gelagert ist. Durch diese schwimmende Lagerung macht er ohne weiteres die Bewegungen der Kette mit und erlaubt es andererseits, auch bei einer ganz geringen Durchbiegung der Kette eine zuverlässige Messung der Antriebskraft sicherzustellen. Besonders günstig ist bei dieser Ausgestaltung mit der geringen Durchbiegung der Kette um beispielsweise 2 mm auf einer Länge von 10 cm, daß der Kraftaufwand für das Strecken der Kette beim Aufbringen der Antriebskraft gegenüber der gesamten Antriebskraft um mehrere, insbesondere drei Größenordnungen geringer ist. Die durch den Antriebskraftfühler bewirkte Wirkungsgradverschlechterung ist somit praktisch allein auf den Rollwiderstand der verwendeten Laufrollen zurückzuführen, der aber ebenfalls sehr gering gehalten sein kann.

Besonders günstig bei Verwendung eines Hydraulikzylinders zur Weiterleitung des Meßsignals des Antriebskraftfühlers ist es, daß hierdurch ganz geringe Kräfte für die Betätigung der Sperreinrichtung erforderlich sind. Gewünschtenfalls kann sogar eine Vorderradfederung mit einer entsprechenden Sperreinrichtung versehen sein, die über die gleiche Hydraulikleitung versorgbar ist.

Gemäß einer weiteren vorteilhaften Ausgestaltung ist es vorgesehen, eine hülsenartige, das Sattelrohr umgebende Blockiermuffe einzusetzen. In der oberen Stellung der Blockiermuffe läßt sich der gesamte Federweg der hinteren Radaufhängung ausnutzen, wobei das Maximalmaß des Einfederns beispielsweise 65 mm und das Maximalmaß des Ausfederns beispielsweise 35 mm betragen kann. Durch die Blockiermuffe, die beispielsweise gegen ein ohnehin vorhandenes Querrohr der Hinterstreben wirken kann, läßt sich der Federweg des Einfederns weich begrenzen oder gewünschtenfalls eine vollständige Blockierung erzielen.

Besonders günstig läßt sich die Federvorrichtung durch eine Spiral-Druckfeder realisieren, in welcher ein Stoßdämpfer vorgesehen ist. Mit einem Kniehebel - oder einer entsprechend ausgebildeten Scheibe - laßt sich die auf die Hinterstreben wirkende Kraft vor dem Sattelrohr, und zwar in dessen unterem Bereich, federnd abfangen. Diese Anordnung ist sowohl Platzals auch gewichtsgünstig, insbesondere im Hinblick auf den niedrigen Schwerpunkt. Aus Gewichtsgründen ist es ferner günstig, daß der Kniehebel vergleichsweises tief unten angebracht ist, so daß sich die Hinterstreben nicht wie beim Diamantrahmen zum Oberrohr, sondern - etwa wie beim Mixte-Rahmen - etwa zur Mitte des Sattelrohres hin erstrecken. Hierdurch läßt sich auch mit gewichtsgünstigeren Federn arbeiten.

Durch die Verwendung des Kniehebels läßt sich zudem eine günstige gewünschte Federcharakteristik herstellen.

Die Anordnung der erfindungsgemäßen Federvorrichtung lediglich etwa im Bereich der unteren Hälfte des Sattelrohres erlaubt zudem gewünschtenfalls die Anbringung einer Trinkflasche oberhalb des Kniehebels.

Es versteht sich, daß der Kniehebel auch am Ende des unteren Drittels des Sattelrohrs gelagert sein kann. Druch verschiedene Durchtrittsausnehmungen am vorderen Schenkel des Kniehebels, an welchen je die Druckfeder angelenkt sein kann, läßt sich leicht eine Anpassung an die unterschiedlichen Fahrergewichte realisieren.

Günstig ist es auch, daß die Federkraft zum Tretlagergehäuse hin verläuft, so daß keine Zusätzliche Versteifung erforderlich ist.

Ein weiterer vorteilhafter Gesichtspunkt besteht darin, daß auch ohne weiteres die Realisierung von Damen- oder Mixte-Rädern möglich ist.

Gemäß einer weiteren Ausführungsart der Erfindung ist es vorgesehen, die Vorderradgabel mit einer Parallelogrammführung federn zu lagern, wobei eine Druckfeder sich zwischen Vorbau oder Lenker und einem abgefederten Teil der vorderen Radaufhängung erstreckt. Der Vorbau kann hierzu mit einem Schwenklager mit horizontaler Achse versehen sein, das sich zwischen dem Lenkerrohr und dem vorderen Teilstück des Vorbaus erstreckt. Es versteht sich hierbei, daß das Schwenklager verbindungssteif gehalten sein muß, um die durch den einseitigen Zug am Lenker beim intensiven Krafteinsatz aufgebrachten Verwindungskräfte auf den Rahmen zu übertragen.

Durch die Parallelogrammführung des Vorderrades lassen sich die Nachteile einer Teleskopführung mit der Verklemmungsneigung beim Bremsen sicher vermeiden. Zudem besteht durch eine entsprechende konstruktive Auslegung die Möglichkeit, die Nickneigung beim Bremsen zu vermindern.

Weitere Einzelheiten, Vorteile und Merkmale ergeben sich aus der nachstehenden Beschreibung eines Ausführungsbeispiels anhand der Zeichnung.

Es zeigen:
- Fig. 1: eine schematische Seitenansicht eines erfindungsgemäß gefederten Fahrrads in einer Ausführungsform der Erfindung;
- Fig. 2: eine schematische Schnittansicht der Federvorrichtung zur Verwendung in dem Fahrrad gemäß Fig. 1;
- Fig. 3: einen Schnitt durch den Kolben gemäß Fig. 2, entlang der Linie III-III;
- Fig. 4: eine Ansicht der Sperrscheibe aus Fig. 2 von unten;
- Fig. 5: eine schematisierte Ansicht des erfindungsgemäßen Antriebskraftfühlers;
- Fig. 6: eine weitere Ausgestaltung des Tretlagers für ein erfindungsgemäßes Fahrrad; und
- Fig. 7: eine weitere Ausführungsform der Federvorrichtung zur Verwendung in dem Fahrrad gemäß Fig. 1.

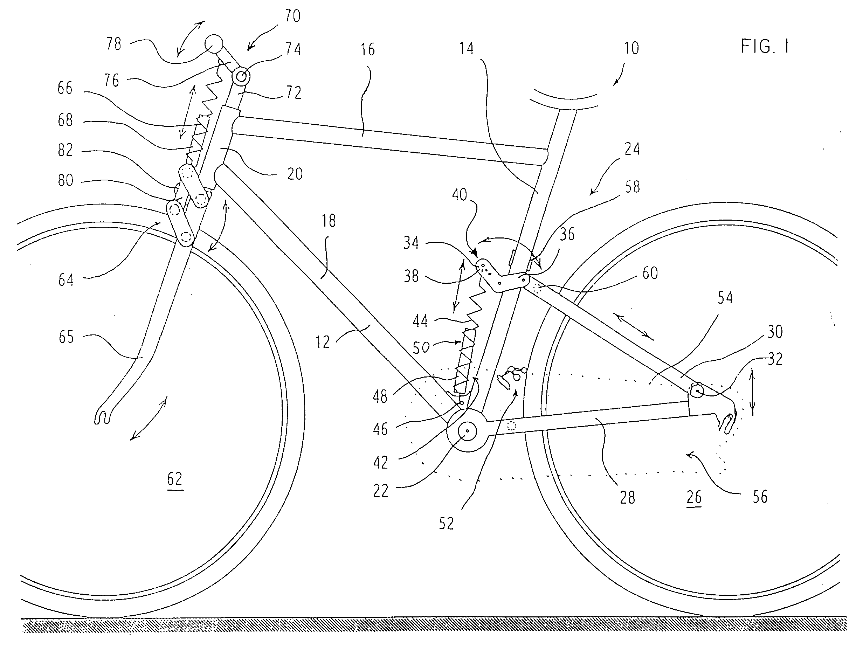

Ein in Fig. 1 dargestelltes Fahrrad 10 weist einen Rahmen 12 auf, der aus einem Sattelrohr 14, einem Oberrohr 16, einem Unterrohr 18 sowie einem Steuerrohr 20 besteht. An dem Sattelrohr 14 sowie an einem Tretlagergehäuse 22 ist eine Radaufhängung 24 angebracht, die eine federnde Lagerung eines Hinterrades 26 an dem Rahmen 12 sicherstellt. Hierzu ist eine Tretlagerstrebe 28 um das Tretlagergehäuse 22 schwenkbar gelagert. Eine Hinterstrebe 30 ist über ein Schwenklager 32 an der Tretlagerstrebe 28 nahe ihres hinteren Endes gelagert. Das vordere Ende der Hinterstrebe 30 ist an einem Kniehebel 34 gelagert, der Teil der Radaufhängung 24 ist.

Der Kniehebel 34 ist etwa mittig an dem Sattelrohr 14 gelagert und erstreckt sich, das Sattelrohr 14 seitlich überlappend, mit seinem hinteren Schenkel 36 zur Hinterstrebe 30. Sein vorderer Schenkel 38 ist mit einer Mehrzahl von Durchtrittsausnehmungen 40 versehen, wobei wahlweise an einer der Durchtrittsausnehmungen 40 eine Federvorrichtung 42 angelenkt ist. Die Federvorrichtung 42 weist eine Spiral-Druckfeder 44 auf und ist an einem unteren Lagerpunkt 46 knapp oberhalb des Tretlagergehäuses 22 gelagert.

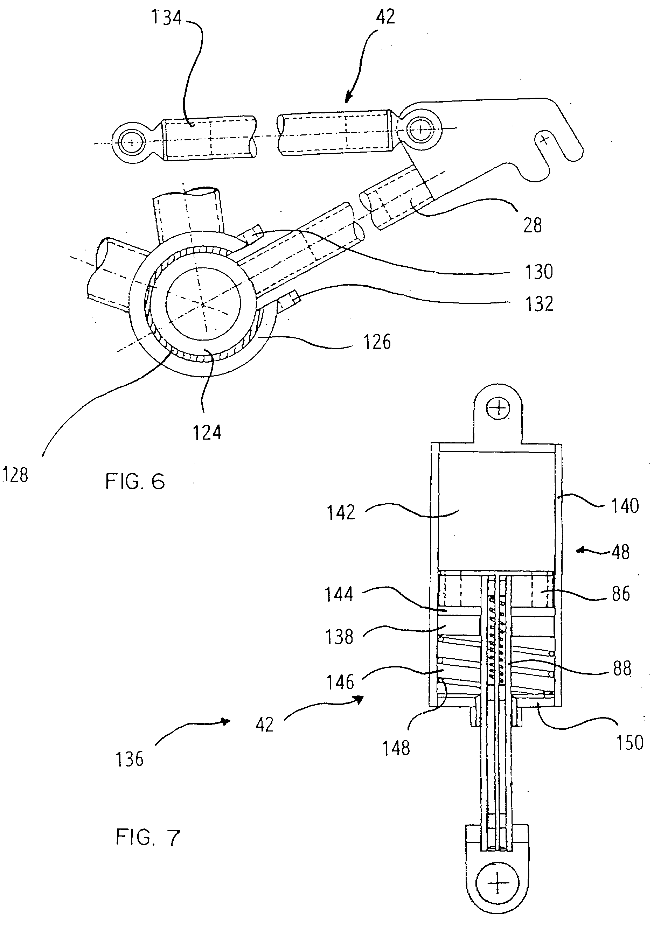

Die Federvorrichtung 42 weist ferner einen Arbeitszylinder oder Stoßdämpfer 48 auf, der sich innerhalb der Spiralfeder 44 erstreckt und eine Behinderungseinrichtung 50 umfaßt. Über eine in Fig. 1 nicht dargestellte Hydraulikleitung ist die Sperreinrichtung 50 mit einem Antriebskraftfühler 52 verbunden, der auf einer Antriebskette 54 abläuft, die Teil eines im übrigen nicht dargestellten Antriebsstranges 56 ist. Der Antriebskraftfühler 52 ist in Fig. 5 näher dargestellt.

Das Sattelrohr 14 umgebend ist knapp oberhalb des Kniehebels 34 eine Blockiermuffe 58 vorgesehen, die nach unten verschieblich ist und in dieser Stellung ein weiteres Einfedern des Hinterrades 26 blockiert. Hierzu stützt die Blockiermuffe 58 ein zwischen den Hinterstreben 30 angeordnetes Querrohr 60 ab.

Ein Vorderrad 62 des Fahrrades 10 ist über eine Parallelogrammführung 64 und eine Gabel 65 an dem Rahmen 12 bzw. dem Steuerrohr 20 abgestützt. Die Parallelogrammführung 64 ist mit einer weiteren Spiral-Druckfeder 66 gefedert gelagert, wobei die Spiral-Druckfeder 66 sich vor dem Steuerrohr 20 im wesentlichen aufrecht erstreckt und vorzugsweise ebenfalls einen Stoßdämpfer 68 umgibt.

Die Spiral-Druckfeder 66 ist an ihrem oberen Ende an einem Vorbau 70 abgestützt, der in dem dargestellten Ausführungsbeispiel ein an einem Lenkerrohr 72 über ein Schwenklager 74 schwenkbar gelagertes vorderes Teilstück 76 aufweist, so daß ein Lenker 78 ebenfalls gegenüber dem Steuerrohr 20 federnd gelagert ist. Durch diese Lagerung addiert sich der Federweg der Parallelogrammführung 64 zu dem des Lenkers 78, obwohl lediglich eine Spiral-Druckfeder 66 erforderlich ist.

Wie in Fig. 1 schematisch dargestellt ist, ist ein Stützkörper 80 drehfest mit dem Lenkerrohr 72 verbunden. An diesem Stützkörper 80 ist beidseitig die Parallelogrammführung 64 der Gabel 65 schwenkbeweglich geführt. Mit der Gabel 65 ist wiederum eine Druckplatte 82 verbunden, die einen unteren Anlenkpunkt der Spiral-Druckfeder 66 darstellt. Besonders günstig bei dieser Anordnung ist es, daß der Steuerkopfwinkel sowie der Nachlauf der Vorderradgabel 65 praktisch federinvariant sind.

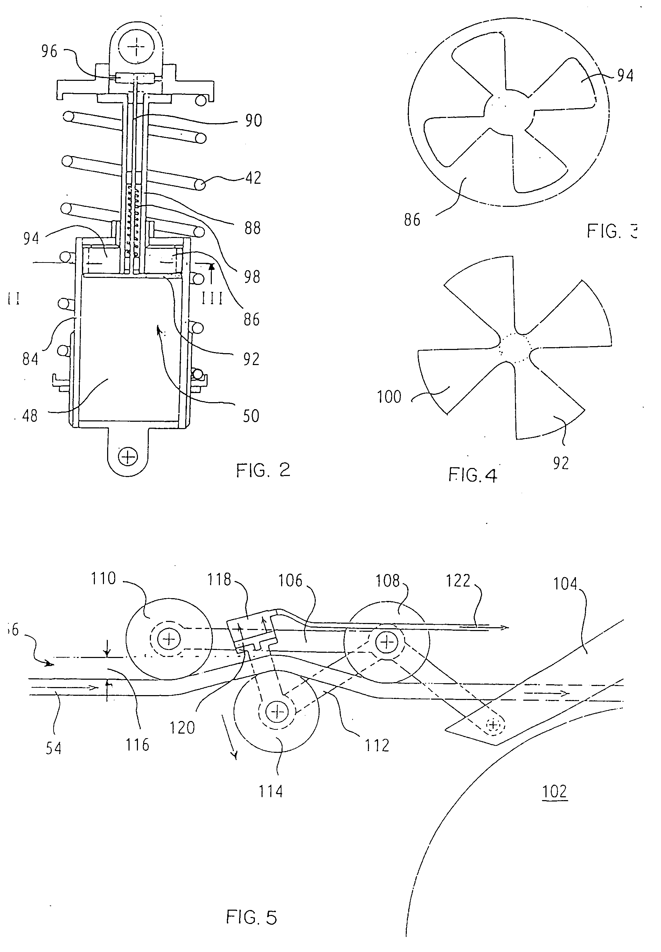

Der in Fig. 2 dargestellte Stoßdämpfer 48 weist einen Druckzylinder 84 und einen Kolben 86 auf, der in dem Druckzylinder 84 geführt ist. Der Kolben 86 ist über eine Kolbenstange 88 mit dem Kniehebel 34 verbunden.

Die Kolbenstange 88 ist rohrförmig ausgebildet und nimmt eine Antriebswelle 90 auf, die fest mit einer Sperrscheibe 92 verbunden ist, deren Ausgestaltung aus Fig. 4 ersichtlich ist. Die Sperrscheibe 92 liegt von unten an dem Kolben 86 an und deckt in der Sperrstellung entsprechende Durchtrittsausnehmungen 94 des Kolbens 86 ab, die auch aus Fig. 3 ersichtlich sind. Die Antriebswelle 90 ist schwenkbar in der Kolbenstange 88 gelagert und weist an ihrem oberen Ende ein Getriebe 96 auf, über welches ihre Drehstellung von dem in Fig. 5 dargestellten Antriebskraftfühler 52 steuerbar ist. Über eine Stützfeder 98 liegt sie federnd von unten an dem Kolben 86 an.

Das Getriebe 96 weist ferner eine nicht dargestellte Handsteuervorrichtung auf, über welche eine Stellung der Sperrscheibe 92 wahlweise manuell arretierbar ist.

In Fig. 3 ist der Kolben 86 im Schnitt entlang der Linie III-III aus Fig. 2 dargestellt. Wie, hieraus ersichtlich ist, sind bei diesem Ausführungsbeispiel die Durchtrittsausnehmungen 94 vergleichsweise groß gehalten, so daß der Arbeitszylinder oder Stoßdämpfer 48 bei der voll geöffneten Stellung der Sperrscheibe 92 gar nicht als Stoßdämpfer wirkt, sondern ein freies Federn möglich ist. Es versteht sich, daß in einem anderen Ausführungsbeispiel auch in an sich bekannter Weise kleine Widerstandsöffnungen für das Hydrauliköl in dem Kolben 86 vorgesehen sein können.

Flügel 100 der Sperrscheibe 92 sind so ausgestaltet, daß sie die Durchtrittsausnehmungen 94 des Kolbens 86 gemäß Fig. 4 und 3 je leicht überlappend abdecken können. Damit läßt sich ein abdichtendes und sicheres Sperren in der Sperrstellung der Behinderungseinrichtung 50 erzielen, wobei die Kombination aus Sperrscheibe 92 und Kolben 86 zusammen mit der Stützfeder 98 zudem als Rückschlagventil wirkt. Diese Kombination führt dazu, daß ein Einfedern entsprechend einem Zusammendrücken der Federvorrichtung 42 nicht mehr möglich ist, hingegen wohl ein Ausfedern entsprechend einem Ausdehnen der Federvorrichtung 42 und des Stoßdämpfers 48.

In Fig. 5 ist schematisch der erfindungsgemäße Antriebskraftfühler 52 dargestellt. Die Antriebskette 54 läuft über ein vorderes Kettenblatt 102, wobei in an sich bekannter Weise ein Umwerfer 104 ein Umschalten zwischen Kettenblättern unterschiedlicher Größe erlaubt. An dem Umwerfer 104 ist fest ein Stützhebel 106 gelagert, der zwei Laufrollen 108 und 110 trägt. Diese Laufrollen laufen oberhalb der Antriebskette 54 auf dieser ab.

An dem Stützhebel 106 nahe der dem Umwerfer 104 benachbarten Laufrolle 108 ist über einen Fühlhebel 112 eine dritte Laufrolle 114 schwenkbar gelagert, wobei zudem über eine nicht dargestellte Feder die Laufrolle 114 zu den Laufrollen 110 und 108 hin gedrückt wird. Die Laufrolle 114 läuft ebenfalls auf der Antriebskette 54 ab, jedoch unterhalb dieser.

Damit verläuft die Antriebskette 54 zwischen den Laufrollen 110 und 108 einerseits und der Laufrolle 114 andererseits leicht bogenförmig hindurch, wobei die Durchbiegung 116 in Fig. 5 aus Gründen der Deutlichkeit erheblich übertrieben dargestellt ist.

Der Antriebskraftfühler 52 weist ferner einen Geberzylinder 118, der auf dem Stützhebel 106 gelagert ist, sowie einen in dem Geberzylinder 118 geführten Geberkolben 120 auf, der mit der Laufrolle 114 verbunden ist. Der Geberzylinder 118 ist an eine Hydraulikleitung 122 angeschlossen, die wiederum mit dem in Fig. 2 schematisch dargestellten Getriebe 96 in Verbindung steht.

Damit wird das Maß der Durchbiegung 116 der Antriebskette 54 als hydraulisches Drucksignal über die Hydraulikleitung 122 übertragen und erlaubt die Verstellung der Sperrscheibe 92 aus Fig. 2. Die Anordnung ist hierbei so getroffen, daß eine verminderte Durchbiegung 116 entsprechend einer zunehmenden Antriebskraft in dem Antriebsstrang 56 ein zunehmendes Sperren der Sperrscheibe 92 gegenüber dem Kolben 86 bewirkt, so daß die Federung härter wird, sobald mehr Pedalkraft aufgebracht wird.

Es versteht sich, daß vielfältige Abwandlungen der Erfindung möglich sind, ohne ihren Rahmen zu verlassen. Beispielsweise kann anstelle der hydraulischen Übertragung des Antriebskraftfühlersignales eine mechanische Übertragung gewählt werden.

Auch kann die Hydraulikleitung 122 zu dem vorderen Stoßdämpfer 68 weitergeführt werden, um dort eine entsprechende Sperrung zu bewirken.

Gewünschtenfalls kann die Handsteuervorrichtung vollständig entfallen.

Auch kann der Antriebskraftfühler kinematisch umgekehrt werden, so daß zwei gegenüber dem Umwerfer 104 schwenkbeweglich gelagerte Laufrollen einer gegenüber dem Umwerfer 104 unbeweglich gelagerten Laufrolle gegenübersteht.

Gemäß der in Fig. 6 dargestellten Ausführungsform ist es vorgesehen, die Tretlagestrebe 28 vorne in einem Gelenkkopf 124 münden zu lassen, der in einem nach hinten offenen Tretlagergehäuse 126 über ein an sich bekanntes Gleitlager 128 gelagert ist. Diese Lösung bringt montagetechnische Vorteile mit sich, wobei über entsprechende Flansche (130, 132) zwischen den beiden Tretlagerstreben, von denen die Tretlagerstrebe 28 in Fig. 6 dargestellt ist, das Lagerspiel sehr leicht einstellbar ist.

In dem in Fig. 6 dargestellten Ausführungsbeipiel ist die Federvorrichtung 42 in Form eines Federbeins 134 ausgebildet, das die Hinterstrebe ersetzt und beipielsweise den aus Fig. 7 ersichtlichen Aufbau haben kann und dann die Behinderungseinrichtung 50 aufweist, auch wenn dies nicht im einzelnen dargestellt ist.

Während bei der Ausführung der Federvorrichtung 42 gemäß Fig. 2 ein Luftpolster zum Ausgleich des Volumens der Kolbenstange 88 vorgesehen sein kann, ist bei der Ausgestaltung der Federvorrichtung 42 als Kolben-/Zylinderanordnung 136 gemäß Fig. 7 anstelledessen eine separate Ausgleichsscheibe 138 vorgesehen, die sich um die Kolbenstange 88 erstreckt und an dieser am Innenumfang eines Zylinders 140 der Kolben-/Zylinderanordnung 136 gelagert ist.

Der Kolben 86 trennt hier einen Arbeitsraum 142 von einem Ausgleichsraum 144, die beide mit einem im wesentlichen inkompressiblen Fluid gefüllt sind und - wie zuvor beschriebenmiteinander in von der Behinderungeinrichtung 50 beeinflußbarer Strömungsverbindung stehen.

Die Ausgleichsscheibe 138 trennt den Ausgleichsraum 144 von einem Ausdehnungsraum 146, der gasgefüllt ist und eine Feder 148 aufnimmt, die hier ebenfalls als Druckfeder ausgebildet ist. Die Feder 148 ist erheblich steifer als die in Fig. 2 dargestellte Feder der Federvorrichtung 42, da die Abfederung lediglich die durch das Eintreten der Kolbenstange 88 in den Ausgleichsraum 144 bewirkte Volumenänderung berücksichtigt. Bei sich verkleinerndem Volumen des Arbeitsraums 142 und sich entsprechend vergrößerndem Volumen des Ausgleichsraums 144 bewegt sich die Ausgleichsscheibe 138 in dem Fig. 7 dargestellten Ausführungsbeispiel nach unten, also gegen die Wirkung der Feder 148. Die indirekte Sicherstellung der Federwirkung ist besonders günstig, da eine außenliegende und somit verschmutzungsanfällige Feder vollständig vermieden werden kann. Durch Befüllen mit einem geeigneten Medium kann zudem eine Korrosionsunanfälligkeit der Feder 148 sichergestellt werden.

Eine weitere Ausgestaltung, die bei erhöhter zur Verfügung stehender Baulänge in Betracht kommt, besteht darin, die Feder 148 in dem Arbeitsraum 142 vorzusehen.

Der Zylinder 140 ist in dem dargestellten Ausführungsbeispiel gemäß Fig. 7 unten mit einer Verschlußscheibe 150 abgeschlossen. Die Verschlußscheibe 150 steht im Gewindeeingriff mit dem Zylinder 140, was eine leichte Einstellung der Federhärte ermöglicht. Selbstverständlich kann die Kolben-/Zylinderanordnung 136 gewünschtenfalls auch umgekehrt montiert sein, so daß sich die Kolbenstange 88 nach oben erstreckt.

Gemäß einer weiteren Abwandlung ist es vorgesehen, die Feder 148 durch eine Gasdruckfeder zu ersetzen, so daß die Kolben-/Zylinderanordnung 136 den Aufbau einer an sich bekannten, jedoch erfindungsgemäß modifizierten Gasdruckfeder hat.

Gemäß eine weiteren Ausgestaltung der Erfindung ist es vorgesehen, den Antriebskraftfühler 52 unmittelbar an dem Umwerfer (104) zu lagern. Hierbei muß ein Höhenausgleich zwischen den unterschiedlichen Höhen der vorderen Kettenblätter geschaffen werden. Es ist auch möglich, den Umwerfer selbst um eine horizontale Querachse schwenkbar zu lagern, und lediglich eine Laufrolle 108 am hinteren Ende des Umwerfers 104 zu montieren, um den Antriebskraftfühler 52 zu realisieren.

## Patentansprüche

1. Gefedertes Fahrrad, mit einem Rahmen (14) und einer an diesem befestigten Radaufhängung (24) für die gefederte Lagerung eines Rades (26), mit einer Federvorrichtung (42) und einer auf die Federvorrichtung wirkenden von außen veränderlichen Behinderungseinrichtung (50), und mit einem Antriebsstrang (56), über welchen eine Antriebskraft von an dem Rahmen gelagerten Pedalen zu einem als Antriebsrad ausgebildeten Rad (26) leitbar ist, dadurch **gekennzeichnet,** daß der Antriebsstrang (56) einen Antriebskraftfühler (52) aufweist, dessen Ausgangsanschluß die Behinderungseinrichtung (50) steuert.

2. Fahrrad nach Anspruch 1, dadurch gekennzeichnet, daß die Behinderungseinrichtung (50) als Sperreinrichtung einseitig, insbesondere gegen das Einfedern, wirkend ausgebildet ist.

3. Fahrrad nach einem der vorhergehenden Ansprüche, dadurch gekennzeichnet, daß der Antriebsstrang (56) eine umlaufende Antriebskette (54) aufweist, über deren oberes Trum die Antriebskraft übertragbar ist, und daß der Antriebskraftfühler (52) eine Durchbiegung des oberen Trums mißt.

4. Fahrrad nach einem der vorhergehenden Ansprüche, dadurch gekennzeichnet, daß die Radaufhängung (24) des Antriebsrades (26) die Federvorrichtung (42) aufweist, auf welche die Behinderungseinrichtung (50) wirkt, und daß die Federvorrichtung (42) eine Feder (44) aufweist, die angrenzend an das Tretlagergehäuse (22) an dem Rahmen (12) aufgehängt ist.

5. Fahrrad nach einem der vorhergehenden Ansprüche, dadurch gekennzeichnet, daß Vorder- (62) und Hinterrad (26) des Fahrrades (10) je eine Federvorrichtung (66; 42) aufweisen, auf welche je die Behinderungseinrichtung (50) wirkt.

6. Fahrrad nach einem der vorhergehenden Ansprüche, dadurch gekennzeichnet, daß die Federvorrichtung (42) eine als Spiralfeder (44) ausgebildete Feder, insbesondere eine Druckfeder, aufweist, die einen Stoßdämpfer (48) umgibt, der von der Behinderungseinrichtung (50) einseitig, insbesondere in Kompressionsrichtung, sperrbar ist.

7. Fahrrad nach einem der vorhergehenden Ansprüche, dadurch gekennzeichnet, daß die Radaufhängung (24) des Hinterrades (26) einen an dem Sattelrohr (14) des Rahmens (12) gelagerten Kniehebel (34) aufweist, an welchem eine Hinterstrebe (30) sowie die Federvorrichtung (42) angelenkt ist, deren Feder (44) sich im wesentlichen parallel zum Sattelrohr (14) nach unten erstreckt.

8. Fahrrad nach einem der vorhergehenden Ansprüche, dadurch gekennzeichnet, daß ein am Sattelrohr (14) gelagerter Kniehebel (34) der Radaufhängung (24) von einer Blockiermuffe (58) blockierbar ist, die während der Fahrt bedienbar ist und durch Einschieben in die Blockadestellung ein Einfedern des Hinterrades (26) verhindert.

9. Fahrrad nach einem der vorhergehenden Ansprüche, dadurch gekennzeichnet, daß die Behinderungseinrichtung (50) in einem Stoßdämpfer (48) ausgebildet ist, dessen Kolben (86) Durchtrittsausnehmungen (94) für Hydrauliköl aufweist, die von der Sperreinrichtung (50) insbesondere nach der Art eines Rückschlagventils, verschließbar sind.

10. Fahrrad nach einem der vorhergehenden Ansprüche, dadurch gekennzeichnet, daß die Behinderungseinrichtung (50) in einem Arbeitszylinder nach der Art eines Stoßdämpfers (48) vorgesehen ist, dessen in dem Kolben (86) vorgesehene Durchströmöffnungen (94) von einer verdrehbaren Sperrscheibe (92), die federbelastet vom Hubraum aus auf dem Kolben (86) gehalten ist, verschließbar sind.

11. Fahrrad nach Anspruch 10, dadurch gekennzeichnet, daß die Sperrscheibe (92) über eine in der Kolbenstange (88) geführte Antriebswelle (90) verdrehbar ist, die über ein Getriebe (96) an den Antriebskraftfühler (52) angeschlossen ist, welches Getriebe (96) insbesondere mit einer Handsteuervorrichtung gekoppelt ist, mit welcher eine Stellung der Sperrscheibe (92) fixierbar ist.

12. Fahrrad nach einem der vorhergehenden Ansprüche, dadurch gekennzeichnet, daß der Antriebskraftfühler (52) drei für das leichte Ablaufen auf der Antriebskette (54) ausgelegte Laufrollen (108, 110, 114) aufweist, von denen die mittlere (114), bezogen auf die Antriebskette (54), den beiden äußeren (108, 110) gegenüberliegt und zwei Laufrollen (108, 110) über einen Stützhebel (106) und die dritte gegenüber diesen über einen Fühlhebel (112) miteinander verbunden sind.

13. Fahrrad nach einem der vorhergehenden Ansprüche, dadurch gekennzeichnet, daß der Antriebskraftfühler (52) an einem Umwerfer (104) nahe eines vorderen Kettenblatts (102) abgestützt ist.

14. Fahrrad nach einem der vorhergehenden Ansprüche, dadurch gekennzeichnet, daß der Antriebskraftfühler (52) sich über 5 bis 20 cm, insbesondere 10 cm, längs der Antriebskette (54) erstreckt und in dem entspannten Zustand der Antriebskette (54) diese um einen geringen Betrag von etwa 1 bis 7 mm, insbesondere 2 mm, federbelastet durchbiegt.

15. Fahrrad nach einem der vorhergehenden Ansprüche, dadurch gekennzeichnet, daß der Antriebskraftfühler (52) über eine Hydraulikleitung (122) mindestens mit der Federvorrichtung (42) für das Hinterrad (26) verbunden ist.

16. Gefedertes Fahrrad, nach einem der vorangehenden Ansprüche mit einem Rahmen und einer an diesem befestigten Radaufhängung, mit einer Federvorrichtung, über welche das Hinterrad des Fahrrades gegenüber dem Rahmen gefedert ist, wobei die Radaufhängung eine Tretlagerstrebe aufweist, die am Tretlagergehäuse schwenkbar gelagert ist, dadurch gekennzeichnet, daß die Radaufhängung (24) einen Kniehebel (34) aufweist, der im Verlauf des Sattelrohres (14) an diesem gelagert ist, und an welchem eine Hinterstrebe (30) sowie die Federvorrichtung (42) angelenkt ist, die sich als Druckfeder (44) entlang des Sattelrohres (14) und vor diesem zum Tretlagergehäuse (22) hin erstreckt.

17. Fahrrad nach Anspruch 16, dadurch gekennzeichnet, daß der Kniehebel-Lagerpunkt vor dem Sattelrohr (14) vorgesehen ist und der hintere Schenkel (36) des Kniehebels (34) sich über das Sattelrohr (14) hinaus nach hinten erstreckt.

18. Fahrrad nach Anspruch 16 oder 17, dadurch gekennzeichnet, daß der Kniehebel (34) die Form eines nach oben offenen V mit einem Öffnungswinkel von 80 bis 150°, insbesondere von 110°, aufweist und insbesondere an seinem vorderen Schenkel (38) mehrere Durchtrittsausnehmungen (40) für das wahlweise Lagern der Federvorrichtung (42) angebracht sind.

19. Fahrrad nach einem der vorhergehenden Ansprüche, dadurch gekennzeichnet, daß die Federvorrichtung (42) eine Kolben-/Zylinderanordnung (136) aufweist, in welcher eine innenliegende Feder (148) vollständig aufgenommen ist.

20. Fahrrad nach Anspruch 19, dadurch gekennzeichnet, daß ein Kolben (86) die Kolben-/Zylinderanordnung (136) in einen Arbeitsraum (142) und einen Ausdehnungsraum (144) teilt, durch welchen die Kolbenstange (88) tritt, und daß eine innenliegende Druckfeder (148) in einem Federraum (146) zwischen einer Ausgleichscheibe (138) und dem Zylinder (140) wirkend aufgenommen ist.

21. Gefedertes Fahrrad mit einer Federvorrichtung nach einem der vorangehenden Ansprüche, dadurch gekennzeichnet, daß die unteren Teile einer Gabel (65) an einem Steuerrohr (20) über eine Parallelogrammführung (64) federnd lagert sind, daß eine Druckfeder (66) sich im wesentlichen parallel zum Steuerrohr (20) und vor diesem erstreckt und daß die Druckfeder an dem ein Schwenklager (74) aufweisenden Vorbau (70) oder an dem Lenker (78) abgestützt ist.

## Claims

1. Sprung bicycle with a frame (14) and a wheel suspension (24) attached thereto for the spring mounting of a wheel, with a suspension means (42) and an externally adjustable inhibiting means (50) acting upon the suspension means and with a drive train (56), by means of which driving force can be conveyed from pedals mounted on the frame to a wheel formed as a drive wheel (26), characterised in that the drive train (56) comprises a driving force sensing device (52), whose output controls the inhibiting means (50).

2. Bicycle according to claim 1, characterised in that the inhibiting means (50) is formed as a blocking means, so as to act one way in particular against spring compression.

3. Bicycle according to one of the preceding claims, characterised in that the drive train (56) comprises a revolving drive chain (54), via the upper section of which driving force can be conveyed and that the driving force sensing device (52) measures a deflection of the upper section.

4. Bicycle according to one of the preceding claims, characterised in that the wheel suspension of the drive wheel (26) comprises the suspension means (42) upon which the inhibiting means (50) acts, and that the suspension means (42) comprises a spring (44) which is mounted adjacent to the bottom bracket housing (22) on the frame (12).

5. Bicycle according to one of the preceding claims, characterised in that the front (62) and the rear (26) wheels each have a suspension means (66; 42) upon which an inhibiting means (50) acts.

6. Bicycle according to one of the preceding claims, characterised in that the suspension means (42) comprises a spring (44) formed as a spiral spring, especially a pressure spring, which surrounds a shock absorber (48), which can be blocked one way by the inhibiting means (50), in particular in the direction of compression.

7. Bicycle according to one of the preceding claims, characterised in that the wheel mounting (24) of the rear wheel (26) comprises a knee lever (34) mounted on the seat tube (14) of the frame (12), onto which a rear stay (30) as well as the suspension means (42) is directed, whose spring (44) extends downwardly essentially parallel to the seat tube (14).

8. Bicycle according to one of the preceding claims, characterised in that a knee lever (34) of the wheel suspension, positioned on the seat tube (14) is blockable by a blocking sleeve (58), which can be operated during the ride and by being pushed into the blocking position prevents spring compression of the rear wheel.

9. Bicycle according to one of the preceding claims, characterised in that the inhibiting means (50) is formed in a shock absorber (48) whose piston has penetration recesses (94) for hydraulic oil, which can be closed by the inhibiting means (50), in particular in the manner of a check valve.

10. Bicycle according to one of the preceding claims, characterised in that the inhibiting means (50) is provided in a work cylinder in the manner of a shock absorber (48), whose penetrating recessess (94) provided in the piston (86) can be closed by a rotatable blocking disc (92) which is maintained spring loaded against the piston (86) by the piston-swept chamber.

11. Bicycle according to one of the preceding claims, characterised in that the blocking disc (92) is rotatable by means of a drive shaft (90) in the piston rod (88), which is connected to the driving force sensing device (52) via a gear (96), said gear (96) being preferably coupled to a manual controlling means, with which a position of the blocking disc (92) can be fixed.

12. Bicycle according to one of the preceding claims, characterised in that the driving force sensing device (52) comprises three rollers (108, 110, 114) for easy gliding of the drive chain (54), of which the middle one (114) lies opposite the two outer ones (108, 110) relative to the drive chain (54) and two rollers (108, 110) are connected to each other by means of a support lever (106) and the third one opposite these via a sensing lever (112).

13. Bicycle according to one of the preceding claims, characterised in that the driving force sensing device (52) is supported on a derailleur (104) close to one of the front chain wheels (102).

14. Bicycle according to one of the preceding claims, characterised in that the driving force sensing device (52) extends for 5 - 20 cm, in particular 10 cm, along the driving chain (54) and in the relaxed state of the driving chain (54) deflects it spring loaded by a small amount of approximately 1 - 7 mm, in particular 2 mm.

15. Bicycle according to one of the preceding claims, characterised in that the driving force sensing device (52) is connected by a hydraulic line (122) at least to the suspension means (42) for the rear wheel (26).

16. Sprung bicycle according to one of the preceding claims, with a frame and a wheel suspension attached thereto, by means of which the rear wheel of the bicycle is spring-suspended with respect to the frame, with the wheel suspension having a bottom bracket stay which is swivel-mounted on the bottom bracket housing (22), characterised in that the wheel suspension (24) comprises a knee lever (34) which is attached along the course of the seat tube (14) and onto which a rear stay (30) as well as the suspension means (42) is articulated, which extend as a pressure spring (44) along the seat tube (14) and in front of the same in the direction of the bottom bracket housing (22).

17. Bicycle according to claim 16, characterised in that the knee lever mounting point is provided in front of the seat tube (14) and the rear leg (36) of the knee lever (34) extends rearwardly past the seat tube (14).

18. Bicycle according to claim 16 or 17, characterised in that the knee lever (34) has an upwardly open V shape, with an angle of aperture of 80 to 150°, in particular 110°, and in particular several penetrating recesses (40) for the selective mounting of the suspension means (42) are provided on the front leg (38).

19. Bicycle according to one of the preceding claims, characterised in that the drive suspension means (42) has a piston-cylinder arrangement (136) in which an internal spring (148) is accommodated completely.

20. Bicycle according to claim 19, characterised in that a piston divides the piston-cylinder arrangement (136) into a working chamber (142) and an expansion chamber (144) through which the piston rod (88) passes and that an internally disposed pressure spring (148) is actively accommodated in a suspension chamber (146) between a compensation disc (138) and the cylinder (140).

21. Sprung bicycle with a suspension means according to one of the preceding claims, characterised in that the lower parts of a fork (65) on a steering tube (20) are mounted spring-suspended by means of a parallelogram guide, that a pressure spring (66) extends essentially parallel to and in front of the steering tube (20) and that the pressure spring (66) rests on the stem (70) comprising a pivot bearing (74) or on the handlebar (78).

## Revendications

1. Bicyclette suspendue avec un cadre (14) et une suspension de roue (24) ci-attachée pour l'installation suspendue d'une roue, avec un moyen de suspension (42) et un moyen (50) d'empêchement réglable de l'extérieur agissant sur le moyen de suspension et ayant un mécanisme de propulsion (56), par lequel la force motrice est transmissible depuis des pédales montées sur le cadre à une roue disposée comme roue de commande (26), caractérisée en ce que le mécanisme de propulsion (56) présente un capteur de force de propulsion (52), dont la sortie commande le moyen d'empêchement (50).

2. Bicyclette selon la revendication 1, caractérisée en ce que le moyen d'empêchement (50) soit formé pour agir unilatéralement comme moyen de blocage en particulier contre la compression du ressort.

3. Bicyclette selon l'une ou l'ensemble des revendications précédentes, caractérisée en ce que le mécanisme de propulsion (56) présente une chaîne d'entraînement (54) continue, la force de propulsion étant transmissible par la partie supérieure de celle-ci et que le capteur de force de propulsion (52) mesure un fléchissement de ladite partie supérieure.

4. Bicyclette selon l'une ou l'ensemble des revendications précédentes, caractérisée en ce que la suspension de la roue de traction (26) contienne le moyen de suspension (42) sur lequel le moyen d'empêchement (50) agit, et que le moyen de suspension (42) présente un ressort (44) qui est monté contigu au boîtier du pédalier (22) sur le cadre (12).

5. Bicyclette selon l'une ou l'ensemble des revendications précédentes, caractérisée en ce que les roues avant (62) et arrière (26) présentent chacune un moyen de suspension (66; 42) sur chacun desquels agit un moyen d'empêchement (50).

6. Bicyclette selon l'une ou l'ensemble des revendications précédentes, caractérisée en ce que le moyen de suspension (42) présente un ressort (44), en particulier un ressort à pression formé comme un ressort spiral, qui entoure un amortisseur (48), qui peut être bloqué unilatéralement par le moyen d'empêchement (50), en particulier dans le sens de la compression.

7. Bicyclette selon l'une ou l'ensemble des revendications précédentes, caractérisée en ce que la suspension (24) de la roue arrière (26) présente un levier à genouillère (34) logé sur la tige de selle (14) du cadre (12), sur lequel un hauban arrière (30) ainsi que le moyen de suspension (42) sont articulés, dont le ressort (44) s'étend vers le bas essentiellement parallèle à la tige de selle (14).

8. Bicyclette selon l'une ou l'ensemble des revendications précédentes, caractérisée en ce qu'un levier à genouillère (34) de la suspension de roue (24), logé sur la tige de selle (14) puisse être bloqué par un manchon de blocage (58), qui peut être actionné pendant la course et empêche la suspension de la roue arrière en étant poussé dans la position de blocage.

9. Bicyclette selon l'une ou l'ensemble des revendications précédentes, caractérisée en ce que le moyen d'empêchement (50) soit formé dans un amortisseur (48) dont le piston présente des creux de passage (94) pour de l'huile hydraulique, qui peuvent être fermés par le moyen d'empêchement (50), en particulier à la manière d'une soupape de non-retour.

10. Bicyclette selon l'une ou l'ensemble des revendications précédentes, caractérisée en ce que le moyen d'empêchement (50) soit pourvu dans un cylindre de travail à la manière d'un amortisseur (48), dont les ouvertures de passage (94) pourvues dans le piston (86) puissent être fermées par un disque de blocage rotatif (92) maintenu contre le piston par la cylindrée sous l'action d'un ressort (86).

11. Bicyclette selon l'une ou l'ensemble des revendications précédentes, caractérisée en ce que le disque de blocage rotatif (92) puisse être tourné par un arbre de transmission (90) dans la tige de piston (88), qui est relié au capteur de force de propulsion (52) par une transmission (96), ladite transmission (96) étant couplée à un moyen de commande manuel, avec lequel une position du disque de blocage (92) peut être fixée.

12. Bicyclette selon l'une ou l'ensemble des revendications précédentes, caractérisée en ce que le capteur de force de propulsion (52) présente trois galets (108, 110, 114) pour le glissement facile de la chaîne d'entraînement (54), dont celui du milieu (114) se trouve en face des deux à l'extérieur (108, 110) relatif à la chaîne d'entraînement (54) et deux galets (108, 110) soient reliés ensemble par un levier de support et le troisième en face de ceux-ci par un vérificateur à levier.

13. Bicyclette selon l'une ou l'ensemble des revendications précédentes, caractérisée en ce que le capteur de force de propulsion (52) soit supporté sur un dérailleur (104) proche d'un des plateaux de devant (102).

14. Bicyclette selon l'une ou l'ensemble des revendications précédentes, caractérisée en ce que le capteur de force de propulsion (52) s'étend de 5 - 20 cm, de préférence 10 cm, le long de la chaîne d'entraînement (54) et à l'état détendu d'une chaîne d'entraînement (54) la fléchit légèrement sous l'effet d'un ressort par environ 1 à 7 mm, en particulier 2 mm.

15. Bicyclette selon l'une ou l'ensemble des revendications précédentes, caractérisée en ce que le capteur de force de propulsion (52) soit relié par un tuyau hydraulique (122) au moins au moyen de suspension (42) pour la roue arrière (26).

16. Bicyclette suspendue selon l'une ou l'ensemble des revendications précédentes, avec un cadre et une suspension ci-attachée, par laquelle la roue arrière de la bicyclette soit suspendue par rapport au cadre, la suspension présentant un hauban de l'axe du pédalier logé pivotant sur le boîtier du pédalier (22), caractérisée en ce que la suspension (24) présente un levier à genouillère (34) qui est monté sur la course de la tige de selle (14) et sur lequel un hauban arrière (30) ainsi que le moyen de suspension (42) sont articulés, qui s'étendent comme ressort de pression (44) le long de la tige de selle (14) et devant celle-ci jusqu'au boîtier du pédalier (22).

17. Bicyclette selon la revendication 16, caractérisée en ce que le point de montage du levier à genouillère soit pourvu devant la tige de selle (14) et que le bras arrière (36) du levier à genouillère (34) s'étende au delà de la tige de selle (14)) vers l'arrière.

18. Bicyclette selon la revendication 16 or 17, caractérisée en ce que le levier à genouillère (34) présente une forme en V inverti, avec an angle d'ouverture de 80 - 150°, de préférence 110° et en particulier que plusieurs ouvertures (40) pour le montage sélectif du moyen de suspension (42) soient fixées au bras avant (38).

19. Bicyclette selon l'une ou l'ensemble des revendications précédentes, caractérisée en ce que le moyen de suspension (42) présente une disposition piston-cylindre (136) dans laquelle un ressort interne (148) est entièrement recueilli.

20. Bicyclette selon la revendication 19, caractérisée en ce qu'un piston divise la disposition piston-cylindre (136)) dans une chambre de travail (142) et une chambre d'expansion (144) à travers lesquelles passe la tige du piston (88) et qu'un ressort à pression (148) disposé à l'intérieur soit recueilli activement dans une chambre de suspension (146) entre un disque de compensation (138) et le cylindre (140).

21. Bicyclette suspendue avec un moyen de suspension selon l'une ou l'ensemble des revendications précédentes, caractérisée en ce que les parties inférieures d'une fourche (65) sur un tube de direction (20) soient montées suspendus par un guide en parallélogramme, qu'un ressort à pression (66) s'étend essentiellement parallèle au tube de direction (20) et devant celui-ci et que le ressort (66) se repose sur la potence (70) présentant un roulement pivotant ou sur le guidon (78).
